# EUROPÄISCHE PATENTSCHRIFT

(11) **EP 1 194 518 B1**
(45) Veröffentlichungstag und Bekanntmachung des Hinweises auf die Patenterteilung: **22.09.2004**
(21) Anmeldenummer: 00956074.9
(22) Anmeldetag: 07.07.2000
(51) Int. Cl.: C11D 3/48, C11D 3/12, A01N 59/00

(54) **NICHT-TOXISCHES, MIKROBIOZIDES REINIGUNGSMITTEL**
NON-TOXIC, MICROBICIDAL DETERGENT
DETERGENT MICROBICIDE NON TOXIQUE

(30) Priorität: 09.07.1999 DE 19932238
(43) Veröffentlichungstag der Anmeldung: 10.04.2002
(73) Patentinhaber: Schott Glas, 55122 Mainz (DE); CARL-ZEISS-STIFTUNG trading as Schott Glas, 55122 Mainz (DE)
(72) Erfinder: LEE, Sean, D-76227 Karlsruhe (DE)
(74) Vertreter: Fritzsche, Thomas M., Dr.
(86) Internationale Anmeldenummer: PCT/DE2000/002230
(87) Internationale Veröffentlichungsnummer: WO 2001/004252

(56) Entgegenhaltungen:
- US-A- 4 155 870

## Beschreibung

Die Erfindung betrifft ein nicht-toxisches gewebeschonendes Reinigungsmittel mit mikrobiozider Wirkung insbesondere für Textilien sowie seine Herstellung und Verwendung.

Reinigungsmittel sind üblicherweise Surfactantien enthaltende Zusammensetzungen, welche Schmutz in einem Lösungsmittel, insbesondere in einem wässrigen Lösungsmittel solubilisieren. Da die meisten Verschmutzungen fetthaltig sind oder fettige Eigenschaften aufweisen, werden diese mittels Surfactantien, insbesondere mittels Tensiden entfernt. Auf diese Weise lassen sich jedoch nur fetthaltige Verschmutzungen solubilisieren. Andere Verschmutzungen wie beispielsweise Proteine oder proteinhaltiger Schmutz, wie beispielsweise Blutflecken, farbige Substanzen, wie beispielsweise Kaffee oder Tee, sowie nicht sichtbare Verschmutzungen insbesondere von Mikroorganismen sind jedoch auf diese Weise nicht ohne weiteres zu entfernen. Aus diesem Grunde werden den Reinigungsmitteln üblicherweise noch mindestens ein Bleichmittel und/oder mindestens ein desinfizierendes Mittel zugesetzt, damit auch die restlichen Verschmutzungen zumindest optisch entfernt werden. Üblicherweise werden Flecken nach dem Ablösen von Fett- und Pigmentverschmutzungen oxidativ entfernt.

Hierzu werden häufigerweise chlorabspaltende Chemikalien verwendet, welche darüber hinaus durch ihr hohes Oxidationspotential gleichzeitig desinfizierend wirken. Durch eine derartige Oxidation wird jedoch häufig nur der farbgebende Anteil der Flecken zerstört, wobei die restlichen unlöslichen Substanzen weiterhin mit der Grundsubstanz verschmutzt bleiben. Durch ihre hohe Reaktivität hat jedoch die Chlorbleiche zum Nachteil, daß sie farbige Textilien angreift und in vielen Fällen den Farbton verändert bzw. verfärbt. Darüber hinaus greift die stark wirkende Chlorbleiche die zu reinigenden Materialien insbesondere Textilien an, so daß bei einem mehrfachen Waschen deren Grundstruktur zerstört wird, was bei Textilien zu einer erhöhten Brüchigkeit führt.

Es ist daher bereits versucht worden, die oxidative Bleiche mittels Peressigsäure durchzuführen. Dieses weist zwar für sich allein eine ausreichende desinfizierende Wirkung auf, jedoch zeigt sie ein zu geringes Eindringungsvermögen in poröses Material was insbesondere bei Textilien zu einer unzureichenden Sterilisationswirkung führt. Darüber hinaus weist auch die Peressigsäure, welche in Reinigungsmitteln aus Perboraten sowie abgespaltenen Acylresten gebildet wird, ebenfalls wie die Chlorbleiche eine oxidative Wirkung auf, wenn auch in einem geringeren Maße.

Diese oxidative Wirkung ist zwar ausreichend für den Farbflecken zerstörenden Bleicheffekt und ist für viele Materialien schonender als andere Bleichmittel, jedoch ist ihre desinfizierende Wirkung nicht in allen Fällen ausreichend. So werden beispielweise aerobe Sporenbildner nicht entfernt. Darüber hinaus führt die Anwendung von Persäuren bei Wolle zu einer erheblichen Schädigung.

Schließlich reagieren Peroxidverbindungen mit Eiweißverschmutzungen unter Alterung des Eiweißkörpers insbesondere bei Blutflecken. Gealtertes Eiweiß wird jedoch mit den üblichen Einwirkzeiten von Reinigungsmitteln nicht mehr oder nur unvollständig entfernt.

Die Erfindung hat daher zum Ziel ein Reinigungsmittel bereitzustellen welches neben guten Reinigungseigenschaften eine sterilisierende Wirkung aufweist, jedoch selbst nicht-toxisch ist.

Bioaktive Gläser sind bereits seit langem bekannt und beispielsweise zusammenfassend von Larry L. Hench und John K. West in "Biological Applications of Bioactive Glasses", Life Chemistry Reports 1996, vol. 13, p. 187 - 241 oder in "An Introduction to Bioceramics", L. Hench und J. Wilson, eds. World Scientific, New Jersey (1993) beschrieben. Bioaktive Gläser zeichnen sich im Gegensatz zu herkömmlichen Gläsern dadurch aus, dass diese in einem wässrigen Medium löslich sind und an ihrer Oberfläche eine Hydroxylapatitschicht ausbilden. Die gängigsten bioaktiven Gläser werden entweder als Schmelzglas hergestellt, wobei diese dann gegenüber normalen Fenster- oder Flaschengläsern einen deutlich geringeren Anteil an SiO₂ und einen wesentlich höheren Anteil an Natrium aufweisen oder sie sind sogenannte Sol-Gel-Gläser, welche dann, im Gegensatz zu Schmelzgläsern einen hohen Anteil von Siliziumoxid sowie einen geringen bis gar keinen Anteil an Natrium enthalten können.

Die wesentlichen Eigenschaften von bioaktivem Glas sind dem Fachmann bekannt und beispielsweise in der US-A 5,074,916 beschrieben. Danach unterscheidet sich bioaktives Glas von herkömmlichen Kalk-Natrium-Silikat-Gläsern dadurch, dass es lebendes Gewebe bindet.

Derartige bioaktive Gläser werden beispielweise zur Heilung von Knochenschäden, insbesondere als synthetisches Knochentransplantat verwendet. Darüber hinaus werden sie zur Heilung von chronischen Wunden, insbesondere bei diabetischen Geschwüren, sowie bei Druck- und Liegewunden in der Geriatrie mit Erfolg eingesetzt. So konnten beispielsweise John E. Rectenwald, Sean Lee und Lyle L. Moldawer et. al. (Infection and Immunity, zur Publikation eingereicht) zeigen, daß bioaktives Glas bei der Maus eine inflammatorische Wirkung zeigt, welche durch eine Stimulierung der Interleukin-6 (IL-6) - Aktivität bei gleichzeitiger Inhibierung der entzündungsstimulierenden Cytokine TNF-alpha, IL-1-alpha und IL-10 sowie MPO (Myeloperoxidase) (siehe auch 19. Annual Meeting, Surgical Infection Society 1999 28.4.-01.05.1999).

Darüber hinaus ist von E. Allen, et. al. (Departments of Microbiology in Periodontology Eastman Dental Institut) bekannt, daß ein bioaktives Glas 45-S-5 welches von Bioglas® U.S. Biomaterials Alachua, FL. 32615 USA erhältlich ist, eine antibakterielle Wirkung zeigt, welche jedoch nicht mit normalen Glaskügelchen, sog. Glasbeads (Fensterglas) erreicht werden kann.

Derartige biologische aktive Gläser setzen jedoch beachtliche Mengen Ca²⁺-Ionen frei. Es war daher zu erwarten, daß sie die Wasserhärte beträchtlich erhöhen, was zu einer verstärkten Verkalkung und einer verringerten Reinigungswirkung führt, so daß sich diese nicht für den Einsatz in Wasch- und Reinigungsmittel eignen.

Darüber hinaus war zu erwarten, daß die abrasive Wirkung von Glaspartikeln zu einer mechanischen Schädigung von Materialien, insbesondere bei Textilien, zu einer Zerstörung des Gewebes führt.

Es wurde nun überraschenderweise gefunden, daß das zuvor definierte Ziel mit einem Reinigungsmittel erreicht werden kann, welches bioaktive Glaspartikel enthält. Sie weisen vorzugsweise eine Löslichkeit von größer als 250 µg Alkaliionen pro Gramm Glas auf, wobei unter dem Oberbegriff Alkaliionen auch Erdalkaliionen zu verstehen sind.

Es wurde überraschenderweise gefunden, daß ein Reinigungsmittel, das derartige Glaspartikel enthält, nicht nur gegenüber Viren und Bakterien biozid wirkt, sondern darüber hinaus auch haut- und gewebefreundlich ist, keinerlei allergische Reaktionen verursacht und darüber hinaus auch schwer entfernbare verschmutzungen wie gealtertes Eiweiß entfernen kann. Überraschenderweise wird durch die Freisetzung von Alkaliionen insbesondere Erdalkaliionen wie Ca²⁺ und Mg²⁺, die Waschmittelwirkung nicht vermindert und auch die Verkalkung nicht verstärkt. Auch die befürchtete Zerstörung bzw. Schädigung des zu reinigenden Materials, insbesondere von textilem Gewebe, wird durch den Zusatz der Glaspartikel nicht bewirkt.

Die Erfindung betrifft somit ein nicht-toxisches Reinigungsmittel mit bioziden und Schmutz entfernenden Eigenschaften zur gemeinsamen Verwendung mit einem Lösungsmittel, umfassend mindestens ein oberflächenaktives Mittel. Die Erfindung ist dabei dadurch gekennzeichnet, daß das Reinigungsmittel Glaspartikel enthält, in einer wässrigen, insbesondere einer physiologischen wässrigen Lösung auf ihrer Oberfläche eine Hydroxylapatitschicht ausbilden. Vorzugsweise setzen die im erfindungsgemäßen Reinigungsmittel enthaltenen Glaspartikel mehr als 300 µg, insbesondere mehr als 500 µg Alkaliionen pro g Glaspartikel frei. Besonderes bevorzugt sind hierbei Glaspartikel, welche mehr als 1 mg Alkali-/Erdalkaliionen pro g Glas freisetzen.

Derartige Reinigungsmittel eignen sich nicht nur zum Reinigen und Sterilisieren von Oberflächen und chirurgischen Instrumenten, sondern auch für textile Materialien insbesondere im Sanitär- und Klinikbereich sowie im Gastronomiegewerbe.

Auch als Geschirrspülmittel insbesondere für Geschirrspülmaschinen ist das erfindungsgemäße Reinigungsmittel besonders geeignet.

Die erfindungsgemäß enthaltenen bioaktiven Gläser sind vorzugsweise ein herkömmliches bioaktives Glas, welches dem Fachmann bestens bekannt ist. Solche Gläser enthalten üblicherweise maximal 60 Gew.% SiO₂, einen hohen Anteil an Na₂O und CaO sowie Phosphor und zwar in einem hohen Molverhältnis von Calcium zu Phosphor, welches sich meist, jedoch nicht notwendigerweise um etwa 5 bewegt. Kommen solche bioaktiven Gläser mit Wasser oder einer Körperflüssigkeit in Kontakt, dann zeichnen sie sich durch spezielle Reaktionen aus, und zwar werden dabei Natrium- und Calciumionen des Glases durch H⁺-Ionen aus der Lösung in Form einer Kationen-Austauschreaktion ersetzt, wodurch eine Silanol-Gruppen aufweisende Oberfläche entsteht, an welche sich Natrium- und Calciumhydroxid anlagern. Die Erhöhung der Hydroxy-Ionenkonzentration führt an der Glasoberfläche nun zu einer weiteren Reaktion mit dem Siliziumnetzwerk, wodurch weitere Silanolgruppen entstehen, die auch tiefer im Glas liegen können.

Aufgrund des hohen alkalischen pH im Glaszwischenraum entsteht eine gemischte Hydroxylapatit-Phase aus CaO und P₂O₅, welche auf der SiO₂-Oberfläche auskristallisiert und in biologischen Materialien mit Mucopolysacchariden, Kollagenen und Glycoproteinen bindet.

Das Molverhältnis von Calcium zu Phosphor ist vorzugsweise > 2 und insbesondere > 3 und ist vorzugsweise < 30, insbesondere < 20, wobei Verhältnisse von < 10 besonders bevorzugt sind.

Besonders bevorzugt sind Reinigungsmittel, die bioaktive Glaspartikel enthalten, welche SiO₂, CaO, Na₂O, P₂O₅, CaF₂, B₂O₃, K₂O, und/oder MgO aufweisen.

Enthält das Reinigungsmittel bioaktive Glaspartikel aus Schmelzglas, dann weisen diese vorzugsweise bezogen auf das Gesamtgewicht an Glas von 40 - 60 Gew.% SiO₂, 10 - 30 Gew.% CaO, 10 - 35 Gew.% Na₂O, 2 - 8 Gew.% P₂O₅, 0 - 25 Gew.% CaF₂, 0 - 10 Gew.% B₂O₃, 0 - 8 Gew. % K₂O, und oder 0 - 5 Gew. % MgO auf. Ist das bioaktive Glas ein Schmelzglas, dann liegt die Obergrenze an enthaltendem Siliziumdioxid bei 60 vorzugsweise bei 55 Gew.%, wobei eine Obergrenze von 50 Gew.% besonders bevorzugt ist. Der Gehalt an Natriumoxid beträgt vorzugsweise mehr als 15 Gew.%, insbesondere mehr als 18 Gew.%. Ein Natriumoxid-Gehalt von ≥ 20 Gew.% ist besonders bevorzugt.

Ist das im erfindungsgemäßen Reinigungsmittel enthaltene bioaktive Glas ein mittels Sol-Gel-Verfahren hergestelltes bioaktives Glas, dann kann sein Anteil an Siliziumdioxid bedeutend höher liegen als bei Schmelzgläsern und sein Anteil an Natriumoxid gleich 0 sein. Mit einem Sol-Gel-Verfahren hergestellte bioaktive Gläser enthalten vorzugsweise 40 bis 90 Gew.% SiO₂, 4 bis 45 Gew.% CaO, 0 bis 10 Gew.% Na₂O, 2 bis 16 Gew.% P₂O₅, 0 bis 25 Gew.% % CaF₂, 0 bis 4 Gew.% B₂O₃, 0 bis 8 Gew.% K₂O und/oder 0 bis 5 Gew.% MgO.

Der Gehalt an Phosphoroxid beträgt bei beiden der zuvor beschriebenen Arten von bioaktiven Gläsern vorzugsweise mindestens 2 Gew.%, insbesondere mindestens 4 Gew.%.

Die mikrobiozid wirkenden Glasteilchen sind in den erfindungsgemäßen Reinigungsmitteln in einer durchschnittlichen Korngröße d₅₀ von ≤ 400 µm, insbesondere ≤ 250 µm enthalten, wobei Korngrößen von ≤ 100 µm besonders bevorzugt sind. Prinzipiell bewirkt ein höheres Verhältnis von Oberfläche zu Gewicht bzw. Volumen eine höhere sterilisierende biozide Wirkung als bei größeren Partikeln. Eine besonders hohe biozide Wirkung wird beispielsweise mit Teilchen in durchschnittlichen Größen von < 50 µm, insbesondere von < 20 µm bzw. < 10 µm erreicht, wobei Partikelgrößen von < 5 µm besonders bevorzugt sind.

Es hat sich jedoch gezeigt, daß im praktischen Bereich Partikelgrößen im Bereich von 2 - 60 µm, insbesonderes von 2 - 50 µm, vorzugsweise 2 - 20 µm durch ihre abrasive Wirkung die mechanische Entfernung von Schmutzpartikeln und damit die Reinigungswirkung besonders unterstützen.

Darüber hinaus weist das erfindungsgemäße Reinigungsmittel eine proteinabbauende, d.h. eine solubilisierende Wirkung auf. Diese Wirkung wird auch bei gealterten, d.h. denaturierten Proteinen erreicht.

Die gewünschte sterilisierende, keimtötende Wirkung wird mit den erfindungsgemäßen Reinigungsmitteln bereits allein ohne weitere Zusätze insbesondere ohne Ag⁺, Cu⁺, Cu²⁺ und/oder Zn⁺ freisetzende Additive erreicht. Trotzdem kann deren Zusatz zur Erreichung synergistischer Effekte erwünscht sein. Die biozide Wirkung des erfindungsgemäßen Reinigungsmittels kann durch die Zugabe weiterer sterilisierender und keimtötender Mittel oder antibiotisch wirkender Mittel in synergistischer Weise verstärkt werden.

Obwohl durch den erfindungsgemäßen Zusatz von Glaspartikeln zu einem Reinigungsmittel zu erwarten war, daß insbesondere bei kalkhaltigen Wasser ein erhöhter Zusatz von Komplexbildnern notwendig sein müßte, um Kalk- und damit auch Schmutzränder auf dem gereinigten Material zu verhindern, hat es sich gezeigt, daß hier überraschenderweise der Zusatz von Antikalkmitteln wie Komplexbildnern, beispielsweise von Polyphosphaten, deutlich verringert werden kann bzw. ganz auf diese verzichtet werden kann ohne daß die befürchteten Kalkabscheidungen entstehen. Vielmehr werden bestehende Kalkreste durch die abrasive Wirkung der Glaspartikel zusätzlich entfernt.

In einer bevorzugten Ausführungsform enthält das erfindungsgemäße Reinigungsmittel, bezogen auf die Trockensubstanz, die Glaspartikel in einer Menge von bis zu 20 Gew.-%, bzw. bis zu 10 Gew.-%, vorzugsweise bis 7 Gew.-%, insbesondere bis 5 Gew.-%. Die Mindestmenge beträgt 0,01 Gew.-%, insbesondere 0,1 Gew.-%, wobei mindestens 0,5 Gew.-% bzw. 1 Gew.-% besonders bevorzugt sind. Übliche Mengenbereiche betragen 1 - 4 Gew.-%.

Die Erfindung betrifft auch ein Verfahren zur Herstellung derartiger Reinigungsmittel welches es dadurch gekennzeichnet ist, daß man Surfactantien, insbesondere eine Mischung verschiedener Surfactantien, insbesondere Tensiden mit den zuvor definierten Glaspartikeln vermischt und ggf. mit einem Lösungsmittel verdünnt.

Die Erfindung betrifft auch die Verwendung derartiger Reinigungsmittel zur Reinigung von Oberflächen, chirurgischen Material, Getränkeflaschen sowie in oder auch als Geschirrspülmittel. Eine weitere besondere Verwendung betrifft die Reinigung von Textilien insbesondere für Klinik, Klinikpersonal und in der Gastronomie.

## Patentansprüche

1. Nicht-toxisches Reinigungsmittel mit bioziden und schmutzentfernenden Eigenschaften zur gemeinsamen Verwendung mit einem Lösungsmittel umfassend mindestens ein oberflächenaktives Mittel, **dadurch gekennzeichnet, daß** es Partikel aus bioaktivem Glas enthält, das in einer wässrigen Lösung auf seiner Oberfläche eine Hydroxylapatitschicht ausbildet.

2. Reinigungsmittel nach Anspruch 1, **dadurch gekennzeichnet, daß** das bioaktive Glas mindestens 300 µg Alkaliionen pro Gramm Glaspartikel freisetzt.

3. Reinigungsmittel nach Anspruch 1, **dadurch gekennzeichnet, daß** die Glaspartikel eine durchschnittliche Teilchengröße von kleiner 400 µm aufweisen.

4. Reinigungsmittel nach einem der vorhergehenden Ansprüche, **dadurch gekennzeichnet, daß** die Glaspartikel eine durchschnittliche Teilchengröße von kleiner 100 µm aufweisen.

5. Reinigungsmittel nach einem der vorhergehenden Ansprüche, **dadurch gekennzeichnet, daß** es als oberflächenaktives Mittel Tenside enthält.

6. Reinigungsmittel nach einem der vorhergehenden Ansprüche, **dadurch gekennzeichnet, daß** das bioaktive Glas 40 - 60 % Gew. % SiO₂, 10 - 30 Gew. % CaO, 10 - 35 Gew. % Na₂O, 2 - 8 Gew. % P₂O₅, 0-25 Gew. % CaF₂, 0 - 10 Gew. % B₂O₃, 0 - 8 Gew. % K₂O, und 0 - 5 Gew. % MgO enthält.

7. Reinigungsmittel nach einem der vorhergehenden Ansprüche, **dadurch gekennzeichnet, daß** es bezogen auf sein Gesamtgewicht an Feststoffen 1 - 7 Gew. % an bioaktiven Glaspartikeln enthält.

8. Verfahren zur Herstellung eines Reinigungsmittels nach einem der Ansprüche 1-7, **dadurch gekennzeichnet, daß** man mindestens ein oberflächenaktives Mittel mit bioaktiven Glaspartikeln versetzt, welche pro Gramm Glaspartikel mindestens 250 µg an Alkaliionen freisetzen.

9. Verwendung von Reinigungsmittel nach einem der Ansprüche 1-8 zur Reinigung von Gegenständen und/oder Oberflächen.

10. Verwendung nach Anspruch 9, **dadurch gekennzeichnet, daß** der Gegenstand ein textiles Material ist.

11. Verwendung nach Anspruch 9, als Geschirrspülmittel

12. Verwendung nach Anspruch 9-11 zur Reinigung in der Klinik und Gastronomie.

## Claims

1. Non-toxic cleaning composition having biocidal and soil removal properties for joint use with a solvent comprising at least one surface-active agent, **characterized in that** it comprises particles of bioactive glass on whose surface in an aqueous solution a hydroxylapatite layer is formed.

2. Cleaning composition according to Claim 1, **characterized in that** the bioactive glass releases at least 300 µg of alkali metal ions per gram of glass particles.

3. Cleaning composition according to Claim 1, **characterized in that** the glass particles have an average size of less than 400 µm.

4. Cleaning composition according to one of the preceding claims, **characterized in that** the glass particles have an average size of less than 100 µm.

5. Cleaning composition according to one of the preceding claims, **characterized in that** as surface-active agent it comprises surfactants.

6. Cleaning composition according to one of the preceding claims, **characterized in that** the bioactive glass contains 40-60% by weight SiO₂, 10-30% by weight CaO, 10-35% by weight Na₂O, 2-8% by weight P₂O₅, 0-25% by weight CaF₂, 0-10% by weight B₂O₃, 0-8% by weight K₂O and 0-5% by weight MgO.

7. Cleaning composition according to one of the preceding claims, **characterized in that** it contains 1-7% by weight of bioactive glass particles, based on its total weight of solids.

8. Process for producing a cleaning composition according to one of Claims 1-7, **characterized in that** at least one surface-active agent is admixed with bioactive glass particles which release at least 250 µg of alkali metal ions per gram of glass particles.

9. Use of cleaning composition according to one of Claims 1-8 for cleaning articles and/or surfaces.

10. Use according to Claim 9, **characterized in that** the article is a textile material.

11. Use according to Claim 9 as a dishwashing detergent.

12. Use according to Claim 9-11 for cleaning in clinical practice and the catering trade.

## Revendications

1. Agent de nettoyage non toxique à propriétés biocides et nettoyantes, en vue de l'utilisation conjointe avec un solvant, comprenant au moins un agent de surface, **caractérisé en ce qu'**il contient des particules en verre bioactif qui forme dans une solution aqueuse sur sa surface une couche d'hydroxy-apatite.

2. Agent de nettoyage selon la revendication 1, **caractérisé en ce que** le verre bioactif libère au moins 300 µg d'ions alcalins par gramme de particule de verre.

3. Agent de nettoyage selon la revendication 1, **caractérisé en ce que** les particules de verre présentent une grosseur de particule moyenne inférieure à 400 µm.

4. Agent de nettoyage selon l'une quelconque des revendications précédentes, **caractérisé en ce que** les particules de verre présentent une grosseur de particule moyenne inférieure à 100 µm.

5. Agent de nettoyage selon l'une quelconque des revendications précédentes, **caractérisé en ce qu'**il contient des agents tensioactifs en tant qu'agent de surface.

6. Agent de nettoyage selon l'une quelconque des revendications précédentes, **caractérisé en ce que** le verre bioactif contient 40 - 60% en poids de SiO₂, 10 - 30% en poids de CaO, 10 - 35% en poids de Na₂O, 2 - 8% en poids de P₂O₅, 0 - 25% en poids de CaF₂, 0 - 10% en poids de B₂O₃, 0 - 8% en poids de K₂O, et 0 - 5% en poids de MgO.

7. Agent de nettoyage selon l'une quelconque des revendications précédentes, **caractérisé en ce qu'**il contient, par rapport à son poids total en matières solides, 1 - 7% en poids de particules de verre bioactives.

8. Procédé en vue de la fabrication d'un agent de nettoyage selon l'une quelconque des revendications 1-7, **caractérisé en ce que** l'on mélange au moins un agent de surface avec des particules de verre bioactives, qui libèrent, par gramme de particule de verre, au moins 250 µg d'ions alcalins.

9. Utilisation de l'agent de nettoyage selon l'une quelconque des revendications 1-8, en vue du nettoyage d'articles et/ou de surfaces.

10. Utilisation selon la revendication 9, **caractérisée en ce que** l'article est un matériau textile.

11. Utilisation selon la revendication 9, en tant qu'agent de rinçage de vaisselle.

12. Utilisation selon les revendications 9-11 en vue du nettoyage dans le domaine des cliniques et de la gastronomie.
